# EUROPEAN PATENT SPECIFICATION

(11) **EP 3 318 117 B1**
(45) Date of publication and mention of the grant of the patent: **13.05.2020**
(21) Application number: 17199492.4
(22) Date of filing: 01.11.2017
(51) Int. Cl.: A01G 3/053

(54) **HEDGE TRIMMER**
HECKENSCHERE
TAILLE-HAIE

(30) Priority: 07.11.2016 CN 201621200709 U
(43) Date of publication of application: 09.05.2018
(73) Proprietor: Nanjing Chervon Industry Co., Ltd., Nanjing, Jiangsu 211106 (CN)
(72) Inventor: LAMELI, Peter, Nanjing, Jiangsu 211106 (CN); ZHOU, Jing, Nanjing, Jiangsu 211106 (CN)
(74) Representative: Sun, Yiming

(56) References cited:
- EP-A1- 0 696 419
- GB-A- 2 424 563
- US-A- 5 531 027
- US-A1- 2013 031 785
- US-A1- 2014 130 473

## Description

The present disclosure relates generally to a hedge trimmer.

In particular the present disclosure relates to an invention in a hedge trimmer, comprising: a motor; a housing for containing or fixing the motor; a main handle being formed with a main gripping portion for a user to grip; a guiding bar extending along a longitudinal axis and protruding out of the housing; and a couple of cutting blades coupled with the guiding bar movably and driven by the motor to do a reciprocating motion along the longitudinal axis, wherein each cutting blade comprises: a base body extending along the longitudinal axis, several cutting portions connected with the base body and extending in a direction of a lateral axis which is substantially perpendicular to the longitudinal axis, the cutting portions are spaced from each other in a direction of the longitudinal axis, wherein the base body is formed with several coupling holes for coupling the cutting blades with the guiding bar movably, the coupling holes go through the base body in a direction of a vertical axis which is substantially perpendicular to the longitudinal axis and the lateral axis, wherein each cutting portion comprises a bottom surface and a cutting surface, the cutting surface is intersected obliquely with the bottom surface, and the bottom surface and the cutting surface form a cutting edge.

### BACKGROUND OF THE DISCLOSURE

Document US 2013/0031785 A1 discloses a hedge trimmer of the generic type defined above.

Hedge trimmers are a kind of gardening tools, which include a couple of cutting blades. The cutting blades can do a reciprocating motion for cutting all kinds of bushes, hedges and etc.

For the currently known hedge trimmers, the cutting blades are easy to wear or blunt during use, which may affect the cutting efficiency. So, a user needs to grind the cutting edges of the cutting blades frequently so as to make the cutting blades maintain sharp.

Us 2013/0031785 A1 discloses a blade beam of a motor driven hedge trimmer having two shearing knives. A shearing knife is movable in an oscillating manner through a stroke between two reversal points in the opposite direction with respect to the other shearing knife. Both shearing knives have spaced-apart cutting teeth that act against each other, and are at least partially provided with shearing blades for the chipless, shearing severing of material to be cut. A first cutting tooth of the one shearing knife lies at least partially in overlap with a first or second cutting tooth of the other shearing knife at the two reversal points. The blade beam has a trim cut region, in which the first cutting tooth of the one shearing knife completely glides, between its two reversal points, over a third cutting tooth lying between the first and the second cutting tooth of the other shearing knife.

US 2014/0130473 A1 discloses a rotary implement including a metallic body that is rotatable around an axis. The metallic body includes a tapered leading edge having an interface surface and an opposite, free surface. The metallic body has a first composition. A metallic layer has a first side surface that is attached to the interface surface and a free, second side surface opposite from the first side surface. The metallic layer has a second, different composition from the first composition.

The statements in this section merely provide background information related to the present disclosure and may not constitute prior art.

### SUMMARY

In order to solve the problems in the prior art, an aim of the present invention is to provide a hedge trimmer, the cutting edges of which can maintain sharp for a long time.

To realize the aim mentioned above, the hedge trimmer of the present invention includes a motor; a housing for containing or fixing the motor; a main handle being formed with a main gripping portion for a user to grip; a guiding bar extending along a longitudinal axis and protruding out of the housing; and a couple of cutting blades coupled with the guiding bar movably and driven by the motor to do a reciprocating motion along the longitudinal axis. Each cutting blade includes a base body extending along the longitudinal axis, and several cutting portions connected with the base body and extending in a direction of a lateral axis which is substantially perpendicular to the longitudinal axis. The cutting portions are spaced from each other in a direction of the longitudinal axis. The base body is formed with several coupling holes for coupling the cutting blades with the guiding bar movably. The coupling holes go through the base body in a direction of a vertical axis which is substantially perpendicular to the longitudinal axis and the lateral axis. Each cutting portion includes a bottom surface and a cutting surface. The cutting surface is intersected obliquely with the bottom surface. The bottom surface and the cutting surface form a cutting edge. In the direction of the vertical axis, the cutting edge includes a first section close to the bottom surface and a second section far from the bottom surface, and the first section and the second section form the entire cutting surface. A surface hardness of the first section is greater than or equal to 750HV1 and less than or equal to 800HV1, and the surface hardness of the second section is greater than or equal to 310HV1 and less than or equal to 360HV1. In the direction of the vertical axis, a ratio between a size of the first section and a size of the cutting portions is greater than or equal to 0.03 and less than or equal to 0.1.

Further, the cutting surface includes a first cutting surface constituting an edge on one side of the first section and a second cutting surface constituting an edge on one side of the second section, and the first cutting surface has greater surface hardness than the second cutting surface.

Further, the first section has greater hardness than the second section.

Further, in the direction of the vertical axis, the first section has a size which is greater than or equal to 0.2mm and less than or equal to 0.6mm.

Further, the several cutting portions are extended toward two sides of the base body in the direction of the lateral axis.

Further, the bottom surfaces of the two cutting blades are fitted with each other.

Further, the cutting portion is formed with two cutting edges on its two sides.

The hedge trimmer of the present invention has advantages. The cutting blades of the hedge trimmer have longer service life, which can ensure the cutting edges sharp after long working time.

### BRIEF DESCRIPTION OF THE DRAWINGS

FIG. 1 is a schematic view of an exemplary hedge trimmer.
FIG. 2 a plane view of the hedge trimmer in FIG. 1.
FIG. 3 is an exploded view of a part of the hedge trimmer in FIG. 1.
FIG. 4 is a bottom view of cutting blades of the hedge trimmer in FIG. 3.
FIG. 5 is a top view of cutting blades of the hedge trimmer in FIG. 3.
FIG. 6 is a schematic view of a first section of the cutting blade in FIG. 4.
FIG. 7 is a section view of the cutting blade in FIG. 6 along line A-A.

The drawings described herein are for illustrative purposes only of selected embodiments and not all possible implementations, and are not intended to limit the scope of the present disclosure. Corresponding reference numerals indicate corresponding parts throughout the several views of the drawings.

### DETAILED DESCRIPTION

The following description of the preferred embodiments is merely exemplary in nature and is in no way intended to limit the invention, its application, or uses.

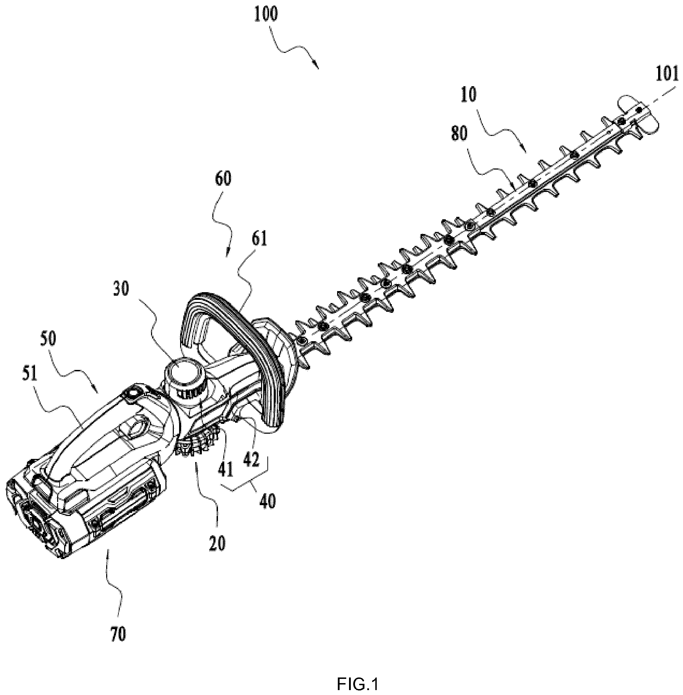

Referring to FIGS. 1-2, a hedge trimmer 100 includes a couple of cutting blades 10, a transmission mechanism 20, a motor 30, a housing 40, a main handle 50 and an auxiliary handle 60.

The motor 30 is used to drive the cutting blades 10 to do a reciprocating motion. The transmission mechanism 20 is configured to connect the cutting blades 10 and the motor 30 so as to transmit energy of the motor 30 to the cutting blades 10. The housing 40 is configured to fix or contain the motor 30. The housing 40 acting as a main frame structure of the hedge trimmer 100 can assemble all the parts together. The motor 30 can be an internal combustion engine which creates energy by burning fuel or an electric motor powered by electricity. In the embodiment, the motor 30 is an electric motor. The hedge trimmer 100 further includes a battery pack 70 which supplies electricity to the electric motor 30. The housing 40 includes a motor housing 41 and a main housing 42. The motor housing 41 for fixing or containing the motor 30 is connected with the main housing 42. A circuit board for controlling the motor 30 is disposed in the main housing 42.

The main handle 50 is formed with a main gripping portion 51 for a user to grip. The main handle 50 can be formed by the housing 40, or a separate portion mounted to the housing 40. Similarly, the auxiliary handle 60 is formed with an auxiliary gripping portion 61 for the user to grip. The auxiliary handle 60 can be formed by the housing 40, or a separate portion mounted to the housing 40. Specifically, the main handle 50 and the auxiliary handle 60 are connected with the housing 40. The user can grip the main gripping portion 51 of the main handle 50 and the auxiliary gripping portion 61 of the auxiliary handle 60 with his two hands so as to operate the hedge trimmer 100. The motor 30 is arranged between the main gripping portion 51 and the auxiliary gripping portion 61.

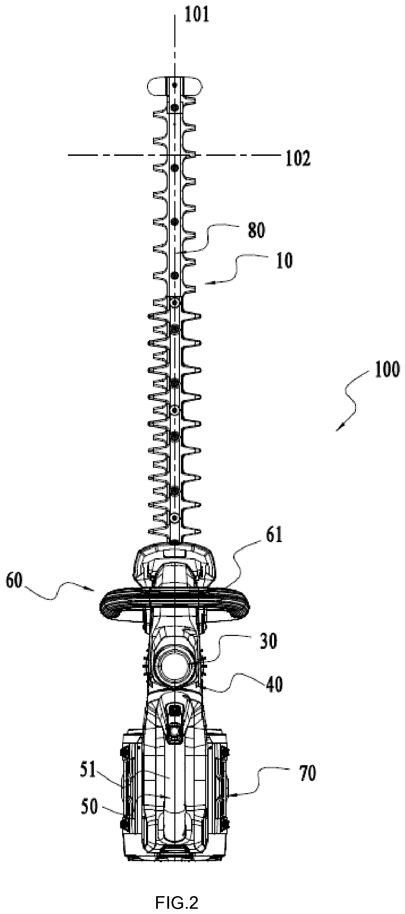

Referring to FIGS. 2-3, the hedge trimmer 100 further includes a guiding bar 80 for guiding the cutting blade 10 to do the reciprocating motion. The guiding bar 80 fixed to the housing 40 is protruded out of the housing 40 and extended along a longitudinal axis 101.

The cutting blades 10 are movably coupled with the guiding bar 80 and able to do the reciprocating motion along the longitudinal axis 101 relative to the guiding bar 80.

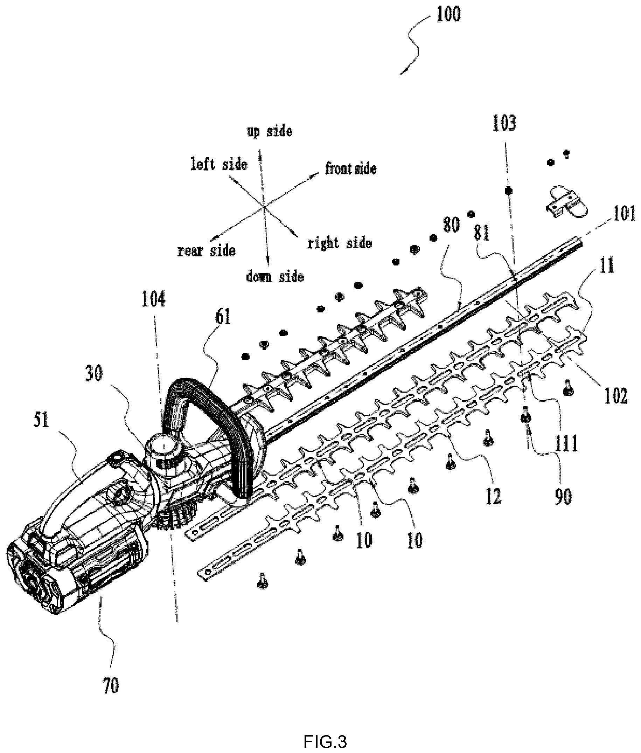

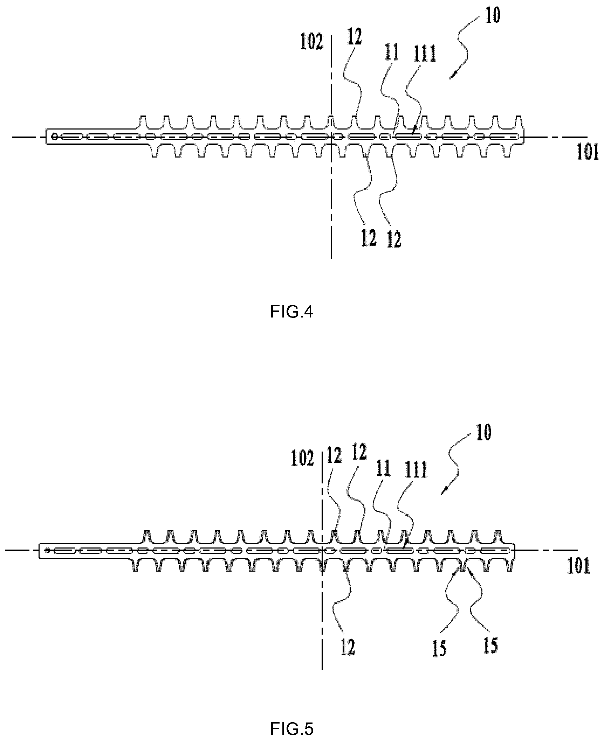

Referring to FIGS. 3-5, each cutting blade 10 includes a base body 11 and a cutting portion 12. The base body 11 extending along the longitudinal axis 101 is provided with a plurality of coupling holes 111 which allow the cutting blades 10 to be movably coupled with the guiding bar 80.

The cutting blade 10 includes several cutting portions 12 which are extended along a direction of a lateral axis 102 substantially perpendicular to the longitudinal axis 101. The several cutting portions 12 are spaced from each other in the direction of the longitudinal axis 101. Specifically, the several cutting portions 12 are arranged on two sides of the base body 11 and extended toward the two sides of the base body 11 along the direction of the lateral axis 102.

The coupling holes 111 go through the base body 11 along a direction of a vertical axis 103. The vertical axis 103 is substantially perpendicular to the longitudinal axis 101 and a lateral axis 102. The motor 20 includes an output shaft which is able to rotate about a rotating axis 104. The rotating axis 104 of the output shaft can be considered as the rotating axis of the motor 30. The rotating axis 104 of the motor 30 is substantially parallel to the vertical axis 103.

For the hedge trimmer 100, the longitudinal axis 101 defines the front and the rear of the hedge trimmer 100, the lateral axis 102 defines the left and the right of the hedge trimmer 100, and the vertical axis 103 defines the up and the down of the hedge trimmer 100.

The cutting blades 10, the auxiliary gripping portion 61 and the motor 30 are arranged along the longitudinal axis 101. It also could be said that the cutting blades 10 are located in front of the auxiliary gripping portion 61 and the motor 30 is located on the rear of the auxiliary gripping portion 61. In the direction of the longitudinal axis 101, the battery pack 70, the motor 30 and the cutting blades 10 are arranged in order. The motor 30 is located between the battery pack 70 and the cutting blades 10. The auxiliary gripping portion 61 is located between the battery pack 70 and the cutting blades 10. The motor 30 is located between the cutting blades 10 and the main gripping portion 51. Specifically, in the direction of the longitudinal axis 101, the main gripping portion 51, the motor 30, the auxiliary gripping portion 61 and the cutting blades 10 are arranged in order. In the direction of the longitudinal axis 101, the battery pack 70, the motor 30, the auxiliary gripping portion 61 and the cutting blades 10 are arranged in order. In the direction of the vertical axis 103, the battery pack 70 is located below the main gripping portion 51.

The hedge trimmer 100 further includes screws 90. The screws 90 pass through the coupling holes 111 of the two cutting blades 10 so as to fasten the cutting blades 10 to the guiding bar 80 movably. The guiding bar 80 is formed with fixing holes 81 for engaging with the screws 90. The screws 90 can limit the cutting blades 10 to move relative to the guiding bar 80 in the direction of the vertical axis 103. The coupling holes 111 are elongated. The two side walls of the coupling holes 111 can limit the cutting blades 10 to move relative to the guiding bar 80 in the direction of the lateral axis 102 and allow the cutting blades 10 to move relative to the guiding bar 80 in the direction of the longitudinal axis 101.

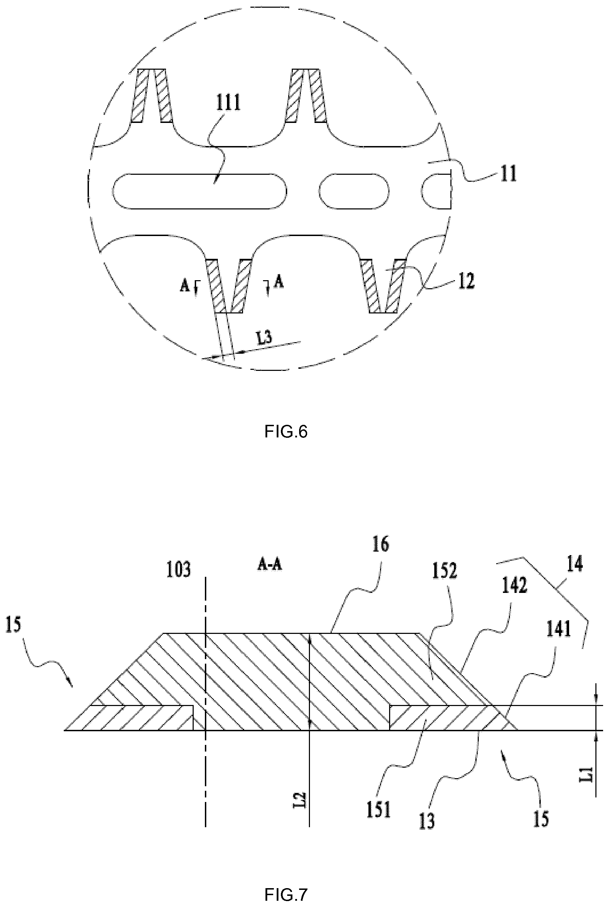

Referring to FIGS. 3-7, the cutting portions 12 have a size in the direction of the vertical axis 103 which is equal to the size of the cutting blade 10 or the base body 11 in the direction of the vertical axis 103. The two sizes are the thickness of the cutting blade 10.

Each cutting portion 12 includes a bottom surface 13 and a cutting surface 14. The cutting surface 14 is intersected obliquely with the bottom surface 13 to form an acute angle. The bottom surface 13 and the cutting surface 14 form a cutting edge 15 corporately. The cutting portion 12 are formed with two cutting edges 15 on its two sides.

The cutting blade 10 further includes a top surface 16. The top surface 16 is connected with the bottom surface 13 by the cutting surface 14. The cutting surface 14 is intersected obliquely with the top surface 16 to form an obtuse angle. A distance between the top surface 16 and the bottom surface 13 is the thickness of the cutting blade 10. The top surface 16 and the bottom surface 13 are substantially parallel with each other, which are all substantially perpendicular to the vertical axis 103.

The cutting edge 15 includes a first section 151 and a second section 152 which form the entire cutting surface 14. The first section 151 is close to the bottom surface 13, and the second section 152 is far from the bottom surface 13. The first section 151 has better abrasion resistance than the second section 152. Thereby, during long working time of the cutting blades 10, the bottom surface 13 of the cutting edge 15, that is the first section 151, is not easy to wear, which can improve the service life of the cutting blades 15 effectively. Otherwise, because the second section 152 is easier to wear than the first section 151, the second section 152 wears more than the first section 151 during working. However, after long working time, the cutting edge 15 can maintain sharp so as to facilitate cutting.

The first section 151 and the second section 152 disposed between the top surface 16 and the bottom surface 13 constitute the thickness of the cutting blade 10. The first section 151 has a thickness L1, that is the size of the first section 151 in the direction of the vertical axis 103, is greater than or equal to 0.2mm and less than or equal to 0.6mm. The thickness of the first section 151 is so designed that it can ensure the abrasive resistance of the first section 151 in the premise of low manufacturing cost. The sickness of the cutting portions 12 is the size L2 in the direction of the vertical axis 103. In the direction of the vertical axis 103, a ratio between L1 and L2 is greater than or equal to 0.03 and less than or equal to 0.1. The sickness of the cutting portions 12 is so designed that it both can ensure the strength of the cutting portions 12 and save material effectively. The sizes of the first section 151 and the cutting portions 12 are so designed that the cutting edge 15 of the cutting portions 12 can maintain sharp for a long time after the wear. The first section 151 has a width which is greater than or equal to 3mm and less than or equal to 5mm.

The first section 151 has different crystal structure from the second section 152. Specifically, the first section 151 has greater hardness than the second section 152. The surface hardness of the first section 151 is greater than or equal to 750HV1 and less than or equal to 800HV1. The surface hardness of the second section 152 is greater than or equal to 310HV1 and less than or equal to 360HV1.

The cutting edge 15 includes a first section 151 and a second section 152. The first section 151 and the second section 152 form the entire cutting surface 14. The first cutting surface 141 has greater surface hardness than the second cutting surface 142. The first cutting surface 141 is not easier to wear than the second cutting surface 142. After a certain working period, the second cutting surface 142 wears more than the first cutting surface 141, so that the cutting edge 15 becomes sharper.

When the two cutting blades 10 are mounted, the two bottom surfaces 13 are fitted to each other and the two top surfaces 16 are far from each other. The cutting edges 15 of the two cutting blades 10 are opposite so that the cutting blades 10 can cut while doing the reciprocating motions.

A method for manufacturing the cutting blade 10, the method not falling within the scope of the invention but described here as useful for understanding the invention, includes: laser cut molding, laser cutting a metal plate so as to obtain the cutting blade 10 without sharpening; laser quenching an area where the first section 151 is located in; improving the hardness of the first section 151; processing the cutting edge 15, grinding the cutting blade 10 without sharpening so as to processing the cutting edge 15; grinding the cutting blade 10 so as to remove the metal burr produced in the manufacturing process. The hardness of the metal plate is greater than or equal to 310HV1 and less than or equal to 360HV1. After laser quenching, the hardness of the first section 151 is greater than or equal to 750HV1 and less than or equal to 800HV1.

The above illustrates and describes basic principles, main features and advantages of the present invention, the scope of which is limited by the appended claims.

## Claims

1. A hedge trimmer (100), comprising:
a motor (30);
a housing (40) for containing or fixing the motor (30);
a main handle (50) being formed with a main gripping portion (51) for a user to grip;
a guiding bar (80) extending along a longitudinal axis (101) and protruding out of the housing (40); and
a couple of cutting blades (10) coupled with the guiding bar (80) movably and driven by the motor (30) to do a reciprocating motion along the longitudinal axis (101),
wherein each cutting blade (10) comprises:
a base body (11) extending along the longitudinal axis (101),
several cutting portions (12) connected with the base body (11) and extending in a direction of a lateral axis (102) which is substantially perpendicular to the longitudinal axis (101), the cutting portions (12) are spaced from each other in a direction of the longitudinal axis (101),
wherein the base body (11) is formed with several coupling holes (111) for coupling the cutting blades (10) with the guiding bar (80) movably, the coupling holes (111) go through the base body (11) in a direction of a vertical axis (103) which is substantially perpendicular to the longitudinal axis (101) and the lateral axis (102),
wherein each cutting portion (12) comprises a bottom surface (13) and a cutting surface (14), the cutting surface (14) is intersected obliquely with the bottom surface (13), and the bottom surface (13) and the cutting surface (14) form a cutting edge (15), **characterized in that**
in the direction of the vertical axis (103), the cutting edge (15) comprises a first section (151) close to the bottom surface (13) and a second section (152) far from the bottom surface (13), and the first section (151) and the second section (152) form the entire cutting surface (14), and
wherein a surface hardness of the first section (151) is greater than or equal to 750HV1 and less than or equal to 800HV1, and the surface hardness of the second section (152) is greater than or equal to 310HV1 and less than or equal to 360HV1, and
wherein in the direction of the vertical axis (103), a ratio between a size of the first section (151) and a size of the cutting portions (12) is greater than or equal to 0.03 and less than or equal to 0.1.

2. The hedge trimmer (100) of claim 1, **characterized in that** the cutting surface (14) comprises a first cutting surface (141) constituting an edge on one side of the first section (151) and a second cutting surface (142) constituting an edge on one side of the second section (152), and the first cutting surface (141) has greater surface hardness than the second cutting surface (142).

3. The hedge trimmer (100) of claim 1, **characterized in that** in the direction of the vertical axis (103), the first section (151) has a size which is greater than or equal to 0.2mm and less than or equal to 0.6mm.

4. The hedge trimmer (100) of claim 1, **characterized in that** the several cutting portions (12) are extended toward two sides of the base body (11) in the direction of the lateral axis (102).

5. The hedge trimmer (100) of claim 1, **characterized in that** the bottom surfaces (13) of the two cutting blades 10 are fitted with each other.

6. The hedge trimmer (100) of claim 1, **characterized in that** the cutting portion (12) is formed with two cutting edges on its two sides.

## Patentansprüche

1. Heckenschere (100), umfassend:
einen Motor (30);
ein Gehäuse (40) zur Aufnahme oder Befestigung des Motors (30);
einen Hauptgriff (50), der mit einem Hauptgriffabschnitt (51) ausgebildet ist, den ein Benutzer greifen kann;
eine Führungsstange (80), die sich entlang einer Längsachse (101) erstreckt und aus dem Gehäuse (40) hervorragt; und
ein Paar von Schneidmessern (10), die mit der Führungsstange (80) beweglich gekoppelt sind und durch den Motor (30) angetrieben werden, um eine Hin- und Herbewegung entlang der Längsachse (101) auszuführen,
wobei jedes Schneidmesser (10) umfasst:
einen Grundkörper (11), der sich entlang der Längsachse (101) erstreckt,
mehrere Schneidabschnitte (12), die mit dem Grundkörper (11) verbunden sind und sich in Richtung einer Querachse (102) erstrecken, die im Wesentlichen senkrecht zu der Längsachse (101) verläuft, wobei die Schneidabschnitte (12) in Richtung der Längsachse (101) voneinander Abstand haben,
wobei der Grundkörper (11) mit mehreren Kopplungslöchern (111) zum beweglichen Koppeln der Schneidklingen (10) mit der Führungsstange (80) ausgebildet ist, wobei die Kopplungslöcher (111) durch den Grundkörper (11) in Richtung einer vertikalen Achse (103) verlaufen, die im Wesentlichen senkrecht zur Längsachse (101) und zur Querachse (102) verläuft,
wobei jeder Schneidabschnitt (12) eine Bodenfläche (13) und eine Schneidfläche (14) umfasst, die Schneidfläche (14) schräg mit der Bodenfläche (13) geschnitten ist und die Bodenfläche (13) und die Schneidfläche (14) eine Schneidkante (15) bilden, **dadurch gekennzeichnet, dass**
die Schneidkante (15) in Richtung der vertikalen Achse (103) einen ersten Abschnitt (151) nahe der Bodenfläche (13) und einen zweiten Abschnitt (152) weit von der Bodenfläche (13) aufweist, und der erste Abschnitt (151) und der zweite Abschnitt (152) die gesamte Schneidfläche (14) bilden, und
wobei eine Oberflächenhärte des ersten Abschnitts (151) größer oder gleich 750HV1 und kleiner oder gleich 800HV1 ist, und die Oberflächenhärte des zweiten Abschnitts (152) größer oder gleich 310HV1 und kleiner oder gleich 360HV1 ist, und
wobei in Richtung der vertikalen Achse (103) ein Verhältnis zwischen einer Größe des ersten Abschnitts (151) und einer Größe der Schneidabschnitte (12) größer als oder gleich 0,03 und kleiner als oder gleich 0,1 ist.

2. Heckenschere (100) nach Anspruch 1, **dadurch gekennzeichnet, dass** die Schneidfläche (14) eine erste Schneidfläche (141), die eine Kante auf einer Seite des ersten Abschnitts (151) bildet, und eine zweite Schneidfläche (142) umfasst, die eine Kante auf einer Seite des zweiten Abschnitts (152) bildet, und die erste Schneidfläche (141) eine größere Oberflächenhärte als die zweite Schneidfläche (142) aufweist.

3. Heckenschere (100) nach Anspruch 1, **dadurch gekennzeichnet, dass** in Richtung der vertikalen Achse (103) der erste Abschnitt (151) eine Größe von größer oder gleich 0,2 mm und kleiner oder gleich 0,6 mm hat.

4. Heckenschere (100) nach Anspruch 1, **dadurch gekennzeichnet, dass** sich die mehreren Schneidabschnitte (12) zu zwei Seiten des Grundkörpers (11) in Richtung der Querachse (102) erstrecken.

5. Heckenschere (100) nach Anspruch 1, **dadurch gekennzeichnet, dass** die Bodenflächen (13) der beiden Schneidmesser (10) miteinander verbunden sind.

6. Heckenschere (100) nach Anspruch 1, **dadurch gekennzeichnet, dass** der Schneidabschnitt (12) mit zwei Schneidkanten an seinen beiden Seiten versehen ist.

## Revendications

1. Coupe-bordure (100), comprenant :
un moteur (30) ;
un logement (40) pour contenir ou fixer le moteur (30) ;
une poignée principale (50) étant formée d'une partie de poignée principale (51) à saisir par un utilisateur ;
une barre de guidage (80) s'étendant le long d'un axe longitudinal (101) et faisant saillie hors du logement (40) ; et
un couple de lames de coupe (10) couplé à la barre de guidage (80) de manière mobile et entraîné par le moteur (30) pour effectuer un mouvement réciproque le long de l'axe longitudinal (101),
dans lequel chaque lame de coupe (10) comprend :
un corps de base (11) s'étendant le long de l'axe longitudinal (101),
plusieurs parties de coupe (12) connectées au corps de base (11) et s'étendant dans une direction d'un axe latéral (102) qui est essentiellement perpendiculaire à l'axe longitudinal (101), les parties de coupe (12) sont espacées l'une de l'autre dans une direction de l'axe longitudinal (101),
dans lequel le corps de base (11) est formé de plusieurs trous de couplage (111) pour coupler les lames de coupe (10) à la barre de guidage (80) de manière mobile, les trous de couplage (111) passent à travers le corps de base (11) dans une direction d'un axe vertical (103) qui est essentiellement perpendiculaire à l'axe longitudinal (101) et à l'axe latéral (102),
dans lequel chaque partie de coupe (12) comprend une surface inférieure (13) et une surface de coupe (14), la surface de coupe (14) est coupée obliquement avec la surface inférieure (13), et la surface inférieure (13) et la surface de coupe (14) forment un bord de coupe (15), **caractérisé en ce que**
dans la direction de l'axe vertical (103), le bord de coupe (15) comprend une première section (151) proche de la surface inférieure (13) et une seconde section (152) éloignée de la surface inférieure (13), et la première section (151) et la seconde section (152) forment la totalité de la surface de coupe (14), et
dans lequel une dureté de surface de la première section (151) est supérieure ou égale à 750HV1 et inférieure ou égale à 800HV1, et la dureté de surface de la seconde section (152) est supérieure ou égale à 310HV1 et inférieure ou égale à 360HV1, et
dans lequel dans la direction de l'axe vertical (103), un rapport entre une taille de la première section (151) et une taille des parties de coupe (12) est supérieur ou égal à 0,03 et inférieur ou égal à 0,1.

2. Coupe-bordure (100) selon la revendication 1, **caractérisé en ce que** la surface de coupe (14) comprend une première surface de coupe (141) constituant un bord sur un côté de la première section (151) et une seconde surface de coupe (142) constituant un bord sur un côté de la seconde section (152), et la première surface de coupe (141) a une dureté de surface plus élevée que la seconde surface de coupe (142).

3. Coupe-bordure (100) selon la revendication 1, **caractérisé en ce que** dans la direction de l'axe vertical (103), la première section (151) a une taille qui est supérieure ou égale à 0,2 mm et inférieure ou égale à 0,6 mm.

4. Coupe-bordure (100) selon la revendication 1, **caractérisé en ce que** les différentes parties de coupe (12) sont étendues en direction de deux côtés du corps de base (11) dans la direction de l'axe latéral (102).

5. Coupe-bordure (100) selon la revendication 1, **caractérisé en ce que** les surfaces inférieures (13) des deux lames de coupe (10) sont insérées l'une avec l'autre.

6. Coupe-bordure (100) selon la revendication 1, **caractérisé en ce que** la partie de coupe (12) est formée de deux bords de coupe sur ses deux côtés.
